# EUROPEAN PATENT APPLICATION

(11) **EP 1 441 517 A1**
(43) Date of publication of application: **28.07.2004**
(21) Application number: 02775409.2
(22) Date of filing: 30.10.2002
(51) Int. Cl.: H04N 5/91, H04N 5/92, H04N 7/08, G11B 20/10

(54) **TIME STAMP VALUE CONTROLLER**

(30) Priority: 31.10.2001 JP 2001334419
(71) Applicant: Panasonic Mobile Communications Co., Ltd., Yokohama-shi, Kanagawa 223-8639 (JP); NTT DoCoMo, Inc., Tokyo 100-6150 (JP)
(72) Inventor: OTAKE, Naoto, Yokohama-shi, Kanagawa 233-0007 (JP)
(74) Representative: Grünecker, Kinkeldey, Stockmair & Schwanhäusser Anwaltssozietät
(86) International application number: PCT/JP2002/011252
(87) International publication number: WO 2003/039145

(57) **Abstract**

There is provided a timestamp value controlling apparatus that can improve storage efficiency of data as maintaining quality of data. In the apparatus, a timestamp value difference calculating section 103 obtains a timestamp value difference indicating a difference between an input timestamp value and a previous timestamp value timestamp value. A judging section 104 judges whether the timestamp value difference is within a reference timestamp value range in which a predetermined permissible range is added to the reference frame interval value. The outputting and selecting section 105 outputs a value, which is obtained by adding the reference frame interval value to the previous timestamp value, as an output timestamp value when the timestamp value difference is within a reference timestamp value range, and outputs the input timestamp value as an output timestamp value when the timestamp value difference is out of the reference timestamp value range.

## Description

### Technical Field

The present invention relates to a timestamp value controlling apparatus that is used in a multimedia processing apparatus or a moving image processing apparatus.

### Background Art

It is general that AV (Audio/Video) data is stored by a recording apparatus, which is typified by a digital video camera. As a format that stores AV data, there is a DV (digital video) format that stores it in a DV cassette or an AVI format that can be selected at the time of capturing an input moving image on a personal computer (PC). Moreover, in recent years, AV transmission using ITU-T/H.324, which is typified by TV phones, has been carried out.

It is general that presentation time (reproduction time/decoding time) is added to each frame (one image in the case of video and fixed time in the case of audio) of AV data at the time of storing data of these formats. Depending on the storage format, there is one in which presentation time is added to each frame and another in which a presentation time interval between the respective frames and the number of continuing frames with the interval are stored as a table. MP4 (ISO/IEC 14496-1 Chapter 13) is one example of the latter.

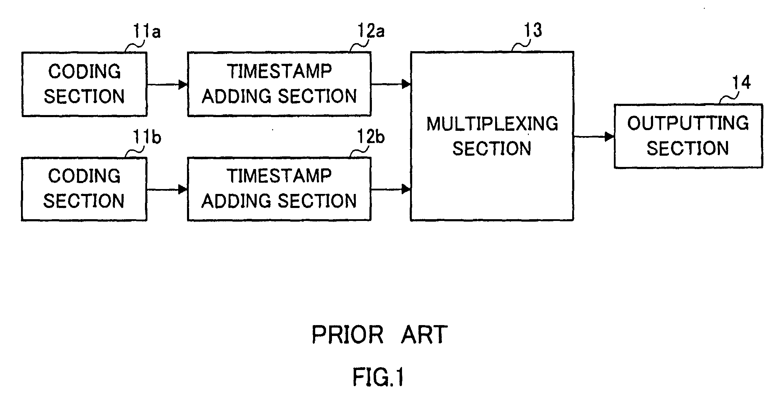

One example of such a conventional recording apparatus will be explained with reference to FIG. 1. The conventional recording apparatus includes first and second coding sections 11a, 11b, first and second timestamp adding sections 12a, 12b, a multiplexing section 13, and an outputting section 14.

The coding sections 11a, 11b code inputting AV data (compression to MPEG4, AMR, etc). The timestamp adding sections 12a, 12b add a timestamp value, which shows presentation time, to each coded frame. The multiplexing section 13 multiplexes AV data from the timestamp adding sections 12a, 12b, converts to data with a format of DV, AVI (Audio Video Interleave) or MP4 to send to the outputting section 14. The outputting section 14 transmits data from the multiplexing section 13 to a file and a network. In addition, as an example in which the timestamp value is added to data, there can be considered one in which addition is performed at the time of coding by the coding sections 11a, 11b, and another in which addition is performed an internal timer at the time of capturing by the multiplexing section 13.

In a case where a storage format such as MP4 is used, since a frame interval of AV data to be stored is made constant, thereby reducing the size in a presentation time information storage table, this is efficient. For this reason, it is general that the side that generates AV data performs frame rate control to make the frame interval constant. Unexamined Japanese Patent Publication HEI-No.7-298112 describes one example of the apparatus that controls the frame rate in order to reduce a record file size. In the case of the apparatus that cannot perform frame rate control, thereby interframe presentation time changes, the number of presentation time information storage tables must be increased, however, in the case of the apparatus that performs control to make the frame rate constant, since there is little deviance, eliminating the need for increasing the number of presentation time information storage tables, good storage efficiency is attained.

However, in the aforementioned apparatus that cannot control the frame rate and the apparatus that can provide only presentation time with a fixed interval (20-millisecond interval and the like) to a generated AV data frame, if multiplexing is directly performed with the storage format such as MP4, the presentation time information storage table is increased, resulting in a decrease in storage efficiency. Moreover, in the conventional recording apparatus, if presentation time, which is different from presentation time of each frame, is added in order to keep the presentation time information storage table minimum, out-of-synch or sound skip is generated to degrade expression quality at a reproduction time.

### Disclosure of Invention

An object of the present invention is to provide a timestamp value controlling apparatus that can improve data storage efficiency as maintaining quality of data.

The essence of the present invention is that a timestamp value difference indicating a difference between an input timestamp value and a previous timestamp value is obtained, it is judged whether the timestamp value difference is within a reference timestamp value range in which a predetermined permissible range is added to a reference frame interval value, a value, which is obtained by adding the reference frame interval value to the previous timestamp value, is output as an output timestamp value when it is judged that the timestamp value difference is within the reference timestamp value range, and the input timestamp value is output as an output timestamp value when it is judged that the timestamp value difference is out of the reference timestamp value range.

According to one embodiment of the present invention, a timestamp value controlling apparatus comprises a timestamp value controlling section that controls a timestamp value to be added upon reception of an input timestamp value, a previous timestamp value, and a reference frame interval value; and timestamp value holding section for temporarily holding an output timestamp value output from the timestamp value controlling section as the previous timestamp value to provide to the timestamp value controlling section, wherein the timestamp value controlling section includes timestamp value difference calculating section for obtaining a timestamp value difference indicating a difference between the input timestamp value and the previous timestamp value timestamp value, judging section for judging whether the timestamp value difference from the difference calculating section is within a reference timestamp value range in which a predetermined permissible range is added to the reference frame interval value, and outputting and selecting section for outputting a value, which is obtained by adding the reference frame interval value to the previous timestamp value, as an output timestamp value when the judging section judges that the timestamp value difference is within the reference timestamp value range, and outputting the input timestamp value as an output timestamp value when the judging section judges that the timestamp value difference is out of the reference timestamp value range.

### Brief Description of Drawings

FIG. 1 is a block diagram illustrating a conventional recording apparatus;
FIG. 2 is a block diagram illustrating the configuration of a timestamp value controlling apparatus according to Embodiment 1 of the present invention;
FIG. 3 is a flowchart explaining the operation of the timestamp value controlling apparatus according to Embodiment 1 of the present invention;
FIG. 4 is a flowchart explaining the operation of the timestamp value controlling apparatus according to Embodiment 1 of the present invention;
FIG. 5 is a block diagram illustrating the configuration of a timestamp value controlling apparatus according to Embodiment 2 of the present invention;
FIG. 6 is a block diagram illustrating the configuration of a timestamp value controlling apparatus according to Embodiment 3 of the present invention; and
FIG. 7 is a block diagram illustrating the configuration of a multimedia data multiplexing processing apparatus according to Embodiments 4 and 5 of the present invention.

### Best Mode for Carrying Out the Invention

The following will specifically explain Embodiments of the present invention with reference to the drawings attached herewith.

### (Embodiment 1)

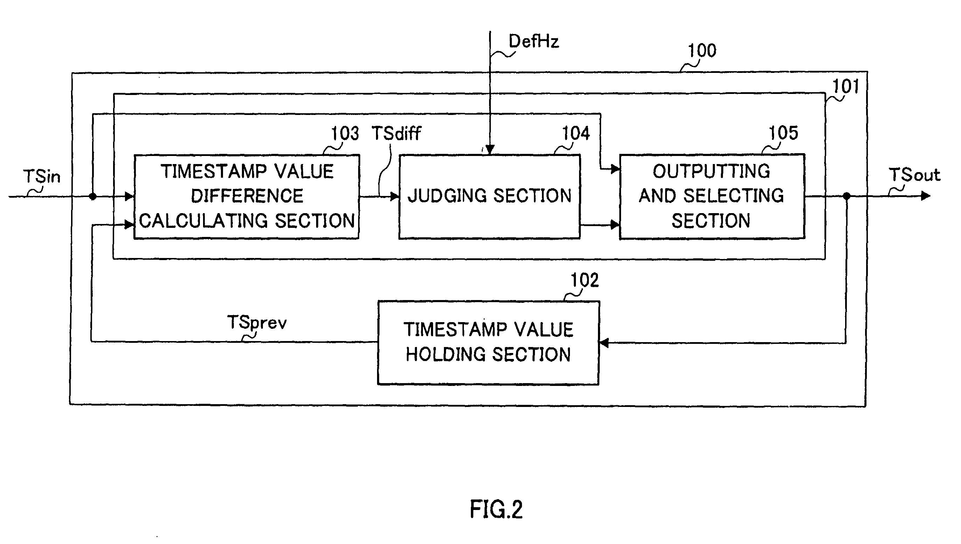

FIG. 2 is a block diagram illustrating the configuration of a timestamp value controlling apparatus according to Embodiment 1 of the present invention.

A timestamp value controlling apparatus 100 according to Embodiment 1 of the present invention includes a timestamp value controlling section 101 and a timestamp value holding section 102. The timestamp value controlling section 101 controls a timestamp value to be added to data upon receipt of an input timestamp value TSin and a previous timestamp value TSprev.

The timestamp value holding section 102 is connected to the timestamp value controlling section 101, temporarily holds an output timestamp value TSout output from the timestamp value controlling section 101 as a previous timestamp value TSprev to provide to the timestamp value controlling section 101. The timestamp value holding section 102 is structured by, for example, a delay section.

The timestamp value controlling section 101 has a timestamp value difference calculating section 103, a judging section 104, and an outputting and selecting section 105. The timestamp value difference calculating section 103 obtains a timestamp value difference TSdiff between the input timestamp value TSin and the previous timestamp value TSprev. The judging section 104 judges whether the timestamp value difference TSdiff is within a reference timestamp value range where a permissible range is added to a reference frame interval value DefHz upon receipt of the reference frame interval value DefHz and the timestamp value difference TSdiff from the timestamp value difference calculating section 103. The reference frame interval value DefHz is a value that is decided from a video frame rate of the coding section or a value that is input from an external device. The permissible range is predetermined and stored in the judging section 104.

The outputting and selecting section 105 receives the input timestamp value TSin and the judging result from the judging section 104. When the judging section 104 judges that the timestamp value difference TSdiff is within the reference timestamp value range, the outputting and selecting section 105 outputs a value, which is obtained by adding the reference frame interval value DefHz to the previous timestamp value TSprev, as the output timestamp value TSout. Moreover, when the judging section 104 judges that the timestamp value difference TSdiff is not within the reference timestamp value range, the outputting and selecting section 105 outputs the input timestamp value TSin as the output timestamp value TSout.

Next, the permissible range will be specifically explained. The permissible range is decided by a plus (+) margin value (FwdMargin), which is a known value, and a minus (-) margin value (RevMargin). Here, the plus margin value and the minus margin value are those that are set in consideration of audiovisual characteristics of the human. The present invention is to control the storing presentation time value based on the actually generated timestamp value of the frame.

Human eyes have a visual characteristic in which "they do not care slight AV synchronous deviance." Regarding the "slight synchronous deviance", for example, the synchronous deviance of television, though this depends on the system to be adopted, there is a report in which "permissible limit of sound advance is 33 (msec) and permissible limit of sound delay is 100 (msec)" (The Institute of Image information and Television Engineers, Technical Report: announced in August, 1981). In such a permissible range, even if there is an error between the actually generated timestamp of the AV frame and the storing presentation time, no deterioration in visual quality occurs at the time of reproduction. Then, the presentation time value is changed within the permissible range to form the presentation time information storage table, thereby making it possible to reduce the table size. For example, in the case of this example, according to Embodiment 1 of the present invention, since addition is provided to the video frame, the plus margin value (FwdMargin) = 100 msec and the minus margin value (RevMargin) = 30 msec (case in which round-off is performed per 10 ms).

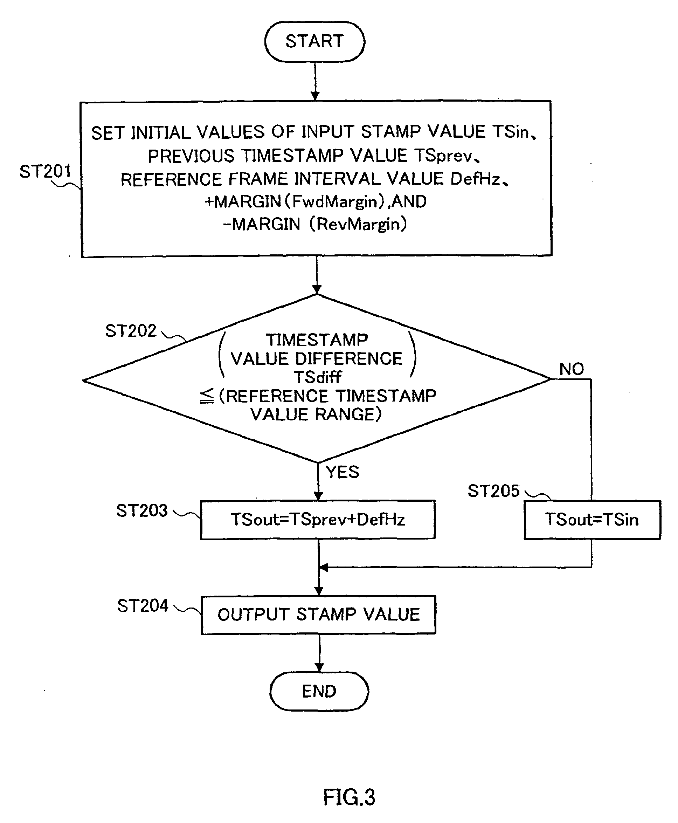

An operation of the timestamp value controlling apparatus 100 according to Embodiment 1 of the present invention will be next explained with reference to FIGS. 2 and 3. FIG. 3 is a flowchart explaining the operation of the timestamp value controlling apparatus according to Embodiment 1 of the present invention.

As illustrated in FIG. 3, in step ST201, initial values of input timestamp value TSin, previous timestamp value TSprev, reference frame interval value DefHz, plus margin value (FwdMargin), and minus margin value (RevMargin) are set.

Next, in step ST202, the timestamp value difference calculating section 103 obtains a timestamp value difference TSdiff between the input timestamp value TSin and the previous timestamp value TSprev, and the judging section 104 judges whether the timestamp value difference TSdiff is within the reference timestamp value range where the permissible range is added to the reference frame interval value DefHz.

In step ST202, when it is judged that the timestamp value difference TSdiff is within the reference timestamp value range, the outputting and selecting section 105 generates a value, which is obtained by adding the reference frame interval value DefHz to the previous timestamp value TSprev, and outputs it as the output time stamp value TSout (steps ST203, 204).

In step ST202, when it is judged that the timestamp value difference TSdiff is not within the reference timestamp value range, the input timestamp value TSin is output as the output timestamp value TSout (steps ST205, 204).

One example of the operation of the timestamp value controlling apparatus 100 according to Embodiment 1 of the present invention will be next explained.

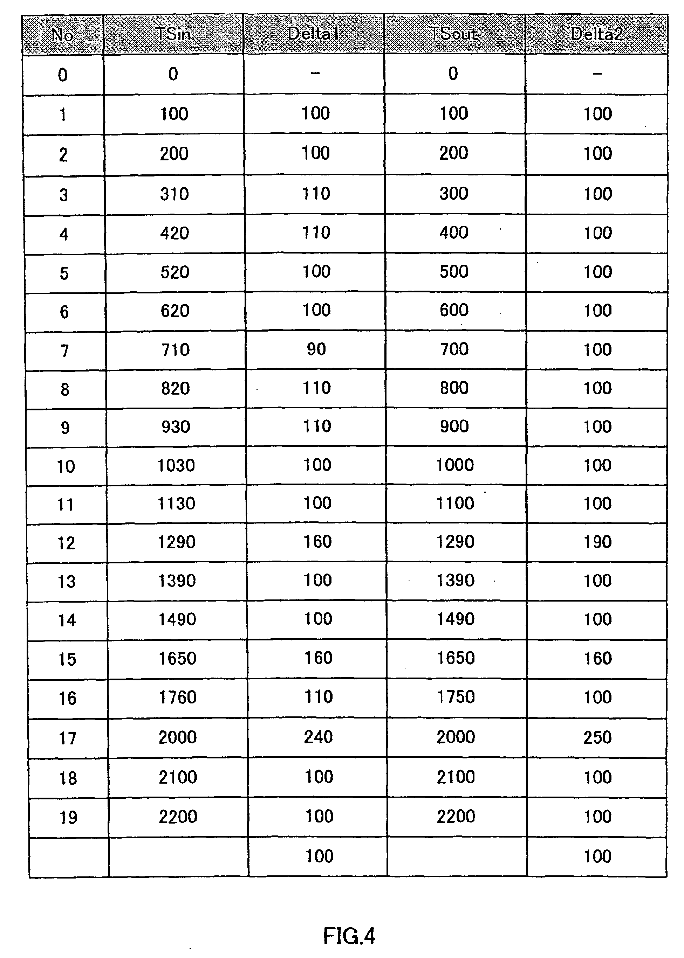

In a case where the reference frame interval value DefHz is 10 Hz (interval value 100 msec) , the pulse margin value (FwdMargin) is 60 msec and the minus margin value (RevMargin) is 20 msec, a comparison result between (Delta1), which is obtained by processing a certain input timestamp TSin with the as-is frame interval, and (Delta2), which is the frame interval of Embodiment 1 of the present invention, is as illustrated in FIG. 4.

Regarding the respective frame interval columns, when (Delta1), which is obtained by processing a certain input timestamp TSin with the as-is frame interval, needs 12 information tables, while when (Delta2), which is the frame interval of Embodiment 1 of the present invention, needs 7 information tables, and it is shown that the size is reduced by 42%.

In this way, according to Embodiment 1 of the present invention, since the timestamp value is controlled to prevent visual deterioration in data from being caused, data quality can be maintained, and since the respective video frame intervals become constant at the multiplexing time and the size of the presentation time information storage table can be reduced at the time of processing data of multiplexing format such as MP4, file storage efficiency can be improved.

### (Embodiment 2)

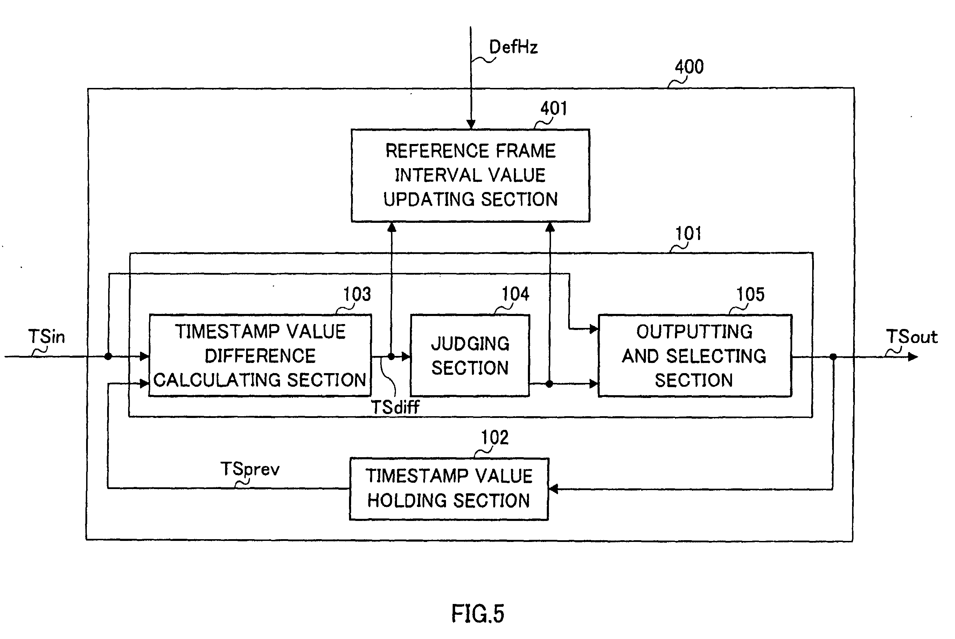

Embodiment 2 of the present invention will be next explained with reference to the drawings. FIG. 5 is a block diagram illustrating the configuration of a timestamp value controlling apparatus according to Embodiment 2 of the present invention. In Embodiment 2, the same reference numerals as those of Embodiment 1 are given to the same components as those of Embodiment 1.

A timestamp value controlling apparatus 400 according to Embodiment 2 of the present invention is formed by adding a reference frame interval value updating section 401 to the timestamp value controlling apparatus according to Embodiment 1 of the present invention illustrated in FIG. 2. The reference frame interval value updating section 401 is connected to the timestamp value difference calculating section 103 and the judging section 104.

The reference frame interval value updating section 401 receives a timestamp value difference TSdiff, a reference frame interval value DefHz, and a judging result from the judging section 104. The reference frame interval value updating section 401 provides the reference frame interval value DefHz to the judging section 104 when the judging section 104 judges that the timestamp value difference TSdiff is within the reference timestamp value range. Moreover, when the judging section 104 judges that the timestamp value difference TSdiff is not within the reference timestamp value range or the time when the judging section 104 judges that the timestamp value difference TSdiff is not within the reference timestamp value range is continued the predetermined number of times, the reference frame interval value updating section 401 updates the reference frame interval value DefHz to a value corresponding to the timestamp value difference TSdiff and provides it to the judging section 104.

An explanation will be next given of an example of the operation of the reference frame interval value updating section 401 according to Embodiment 2 of the present invention.

For example, it is assumed that 15 Hz (66-millisecond interval), 10 Hz (100-millisecond interval), and 5 Hz (200-millisecond interval) are prepared as default values of the reference frame interval of the reference frame interval value updating section 401. When operations are performed with the current reference frame interval value of 10 Hz on the conditions where the threshold of 15 Hz and 10 Hz is 83-millisecond interval and the threshold of 10 Hz and 5 Hz is 150-millisecond interval, and when the timestamp value difference TSdiff is less than 83 milliseconds or more than 150 milliseconds, the reference frame interval value updating section 401 judges that the values are close to 15 Hz and 5 Hz, respectively, and provides these values to the judging section 104. Moreover, in consideration of absorbing the sudden frame interval value error, the number of time when the value is less than 83 milliseconds or more than 150 milliseconds continuously is counted, and when this continues more than a fixed number of times (for example, three times), it can be judged that the values are close to 15 Hz and 5 Hz, respectively.

In this way, according to Embodiment 2 of the present invention, in addition to the effect of Embodiment 1 of the present invention, since the reference frame interval value updating section 401 updates the reference frame interval value DefHz, which is to be provided to the judging section 104, to a value corresponding to the timestamp value difference TSdiff, it is possible to follow the change in the interval of the input timestamp value TSin even if the interval of the input timestamp value TSin changes largely, so that the presentation time storage table can be reduced.

### (Embodiment 3)

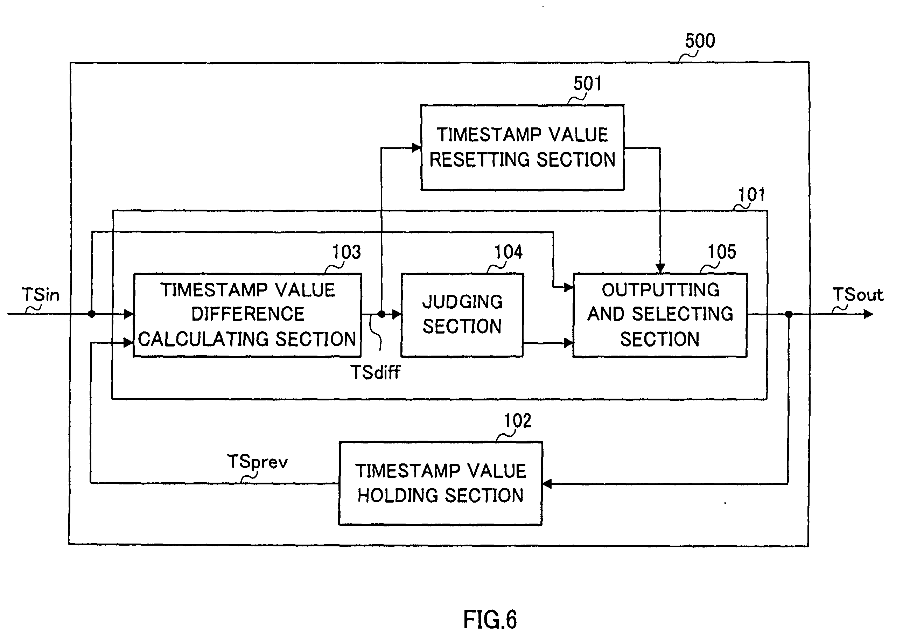

Embodiment 3 of the present invention will be next explained with reference to the drawings. FIG. 6 is a block diagram illustrating the configuration of a timestamp value controlling apparatus according to Embodiment 3 of the present invention. In Embodiment 3, the same reference numerals as those of Embodiment 1 are given to the same components as those of Embodiment 1.

A timestamp value controlling apparatus 500 according to Embodiment 3 of the present invention is formed by adding a timestamp value reset section 501 to the timestamp value controlling apparatus according to Embodiment 1 of the present invention illustrated in FIG. 2. The timestamp value reset section 501 is connected to the timestamp value difference calculating section 103 and the outputting and selecting section 105.

The timestamp value reset section 501 resets the output timestamp value TSout from the outputting and selecting section 105 to the same value as the input timestamp value TSin when a non-zero state of the timestamp value difference TSdiff obtained by the timestamp value difference calculating section 103 is continued for a predetermined interval.

In addition, Embodiment 3 of the present invention can be applied to Embodiment 2 of the present invention. Moreover, Embodiments 1 to 3 can be carried out by means of software.

Thus, according to Embodiment 3 of the present invention, in addition to the effect of Embodiment 1 or that of Embodiment 2, in the system in which a bit rate at the data generating time by the coding section is desirably matched with a bit rate at the storing (multiplexing) time, the output timestamp value is set to the same value as the input timestamp value with a predetermined interval (for example, one second interval) to make it possible to match the relevant rate with the bit rate of media data output from the coding section, so that the presentation time storage table c'an be reduced as maintaining the bit rate.

### (Embodiment 4)

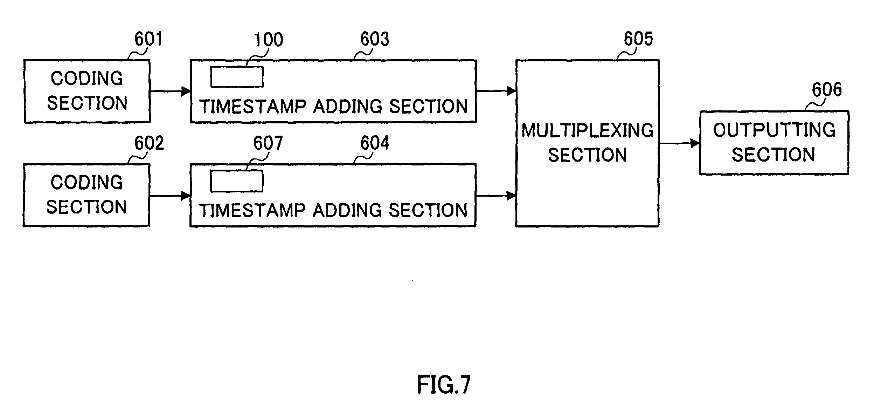

An explanation will be next given of a multimedia data multiplexing processing apparatus according to Embodiment 4 of the present invention. FIG. 7 is a block diagram illustrating the configuration of the multimedia data multiplexing processing apparatus according to Embodiment 4. In Embodiment 4 of the present invention, the same reference numerals as those of Embodiment 1 are given to the same components as those of Embodiment 1.

The multimedia data multiplexing processing apparatus according to Embodiment 4 includes first and second coding sections 601, 602, first and second timestamp adding sections 603, 604, a multiplexing section 605, and an outputting section 606.

The first coding section 601 codes inputting video data (compression to MPEG4 Video and the like). The second coding section 602 codes inputting audio data (compression to GSM-AMR and the like). The first timestamp adding section 603 has the timestamp value controlling apparatus 100. The first timestamp adding section 603 adds the output timestamp value TSout from the timestamp value controlling apparatus 100 to video data from the first coding section 601. The second timestamp adding section 604 has an internal timer 607. The second timestamp adding section 604 adds the timestamp value from the internal timer 607 to audio data from the second coding section 602.

The multiplexing section 605 multiplexes data from the first and second timestamp adding sections 603 and 604 to MP4 format to generate multiplexed data, and provide to the outputting section 606. The outputting section 606 stores multiplexed data from the multiplexing section 605 in a flash memory device via the file system and the like.

Additionally, in Embodiment 4 of the present invention, the first timestamp adding section 603 may be structured to have the timestamp value controlling apparatus 400 or the timestamp value controlling apparatus 500 according to Embodiment 2 or Embodiment 3 in place of the timestamp value controlling apparatus 100.

In this way, according to Embodiment 4 of the present invention, since the size of the storage file can be reduced as maintaining the visual quality of video data and audio data when video data and audio data are simultaneously input, the memory device of the multiplexing section 605 can be effectively used.

### (Embodiment 5)

An explanation will be next given of a multimedia data transmitting apparatus according to Embodiment 5 of the present invention. FIG. 7 is a block diagram illustrating the configuration of the multimedia data multiplexing processing apparatus according to Embodiment 5. In Embodiment 5 of the present invention, the same reference numerals as those of Embodiment 1 are given to the same components as those of Embodiment 4.

Similar to Embodiment 4 of the present invention, the multimedia data transmitting apparatus according to Embodiment 5 includes the first and second coding sections 601, 602, the first and second timestamp adding sections 603, 604, the multiplexing section 605, and the outputting section 606.

The first and second coding sections 601, 602, the first and second timestamp adding sections 603, 604, and the multiplexing section 605 in the multimedia data transmitting device according to Embodiment 5 of the present invention operate in the same manner as Embodiment 4 of the present invention. The outputting section 606 operates as a transmission path section for transmitting multiplexed data from the multiplexing section 605.

Additionally, in Embodiment 5 of the present invention, the first timestamp adding section 603 may be structured to have the timestamp value controlling apparatus 400 or the timestamp value controlling apparatus 500 according to Embodiment 2 or Embodiment 3 in place of the timestamp value controlling apparatus 100.

In this way, according to Embodiment 5 of the present invention, since the amount of transmission data can be reduced as maintaining the visual quality of video data and audio data when video data and audio data are simultaneously input, an effect such as savings in charge for communication data can be expected.

In addition, the present invention can be applied to media data of which an error of presentation time at the time of storing does not have any influence upon the human-audiovisual quality.

Moreover, the timestamp value controlling apparatus according to any one of Embodiments 1 to 3 may be installed between the timestamp adding section and the multiplexing section or in the interior of the multiplexing section.

As explained above, according to the present invention, since the timestamp value is controlled to prevent occurrence of visual deterioration in data, quality of data can be maintained, and since the respective video frame intervals become constant at the multiplexing time and the size of the presentation time information storage table can be reduced, file storage efficiency can be improved.

This application is based on the Japanese Patent Application No. 2001-334419 filed on October 31, 2001, entire content of which is expressly incorporated by reference herein.

### Industrial Applicability

The present invention can be applied to a timestamp value controlling apparatus that is used in a multimedia processing apparatus, a moving image processing apparatus, or the like.

## Claims

1. A timestamp value controlling apparatus comprising:
a timestamp value controlling section that controls a timestamp value to be added upon reception of an input timestamp value, a previous timestamp value, and a reference frame interval value; and
a timestamp value holding section for temporarily holding an output timestamp value output from said timestamp value controlling section as the previous timestamp value to provide to said timestamp value controlling section,
wherein said timestamp value controlling section comprises:
a timestamp value difference calculating section for obtaining a timestamp value difference indicating a difference between the input timestamp value and the previous timestamp value timestamp value;
a judging section for judging whether the timestamp value difference from said difference calculating section is within a reference timestamp value range in which a predetermined permissible range is added to the reference frame interval value; and
an outputting and selecting section for outputting a value, which is obtained by adding the reference frame interval value to the previous timestamp value, as an output timestamp value when said judging section judges that the timestamp value difference is within the reference timestamp value range, and outputting the input timestamp value as an output timestamp value when said judging section judges that the timestamp value difference is out of the reference timestamp value range.

2. A multimedia data multiplexing processing apparatus comprising the timestamp value controlling apparatus according to claim 1.

3. A multimedia data transmitting apparatus comprising the timestamp value controlling apparatus according to claim 1.

4. The timestamp value controlling apparatus according to claim 1, further comprising a timestamp value resetting section for resetting the output timestamp value to the same value as the input timestamp value when a non-zero state of the timestamp value difference obtained by said timestamp value difference calculating section is continued for a predetermined interval.

5. A multimedia data multiplexing processing apparatus comprising the timestamp value controlling apparatus according to claim 4.

6. A multimedia data transmitting apparatus comprising the timestamp value controlling apparatus according to claim 4.

7. The timestamp value controlling apparatus according to claim 1, further comprising a reference frame interval value updating section for updating the reference frame interval value to a value corresponding to the timestamp value difference when said judging section judges that the timestamp value difference is out of the reference timestamp value range or when the time when said judging section judges that the timestamp value difference is out of the reference timestamp value range is continued a predetermined number of times.

8. A multimedia data multiplexing processing apparatus comprising the timestamp value controlling apparatus according to claim 7.

9. A multimedia data transmitting apparatus comprising the timestamp value controlling apparatus according to claim 7.

10. The timestamp value controlling apparatus according to claim 7, further comprising a timestamp value resetting section for resetting the output timestamp value to the same value as the input timestamp value when a non-zero state of the timestamp value difference obtained by said timestamp value difference calculating section is continued for a predetermined interval.

11. A multimedia data multiplexing processing apparatus comprising the timestamp value controlling apparatus according to claim 10.

12. A multimedia data transmitting apparatus comprising the timestamp value controlling apparatus according to claim 10.
